# FASCICULE DE BREVET EUROPEEN

(11) **EP 0 903 079 B1**
(45) Date de publication et mention de la délivrance du brevet: **24.07.2002**
(21) Numéro de dépôt: 98402088.3
(22) Date de dépôt: 20.08.1998
(51) Int. Cl.: A01J 25/13

(54) **Dispositif de moulage de fromages**
Vorrichtung zum Formen von Käse
Device for moulding cheese

(30) Priorité: 05.09.1997 FR 9711091
(43) Date de publication de la demande: 24.03.1999
(73) Titulaire: FROMAGERIES BEL, 75008 Paris (FR)
(72) Inventeur: Couly, Gérard, 95390 Saint Prix (FR)
(74) Mandataire: Jacobson, Claude

(56) Documents cités:
- EP-A- 0 559 584
- FR-A- 2 447 677
- FR-A- 2 539 271
- FR-A- 2 711 037
- GB-A- 1 335 651
- GB-A- 2 132 131

## Description

L'invention concerne un dispositif de moulage de fromages selon le préambule de la revendication 1, comprenant un moule unique ou constitué sous la forme d'un bloc-moules comprenant plusieurs moules, pour fabriquer des fromages à pâte molle ou à pâte pressée.

De façon traditionnelle, les moules de fromagerie utilisés pour la fabrication de fromages à pâte molle ou à pâte pressée cuite ou non, sont constitués soit d'une jupe seule, soit d'une jupe et d'un fond amovible auxquels peuvent être rajoutés éventuellement un piston presseur connu dans la technique sous le nom de casquette, dans le cas des pâtes pressées. Le rôle du moule est de conférer au produit sa forme définitive, permettre le transport du caillé au cours de certaines étapes technologiques (pressage, acidification) et la poursuite de l'élimination du lactosérum présent dans le caillé (égouttage) ; il confère également une trame au produit.

A cet effet les moules à fromages traditionnels à jupe lisse utilisent une toile dans laquelle est déposée le caillé ; si les toiles permettent l'écoulement du lactosérum et confèrent une trame au produit, ces moules ont l'inconvénient de donner naissance à des empreintes ou creusures provoquées par les plis ou les coutures de la toile, pouvant favoriser la formation de moisissures. De plus, la durée d'utilisation de la toile est réduite par le fait qu'elle subit des contraintes mécaniques qui accélèrent sa dégradation.

Afin d'éviter ces inconvénients, on a remplacé ce type de moules par des moules à toile métallique à mailles très fines ou en tôle à crépine, réalisés en matériau inoxydable ou protégés contre l'oxydation.

Toutefois, à l'utilisation, ces moules présentent l'inconvénient que les toiles ou filets, qu'ils soient en matière naturelle, synthétique ou métallique, doivent être enlevés -des moules afin qu'il soit possible de séparer les fromages moulés. En outre ce type de moules présente des difficultés de nettoyage, de mécanisation, de démoulage, de lavage et de stockage suite au flottement et à l'usure de la toile ; le remplacement de la toile entraîne des coûts supplémentaires.

Afin de résoudre les problèmes liés aux manipulations complémentaires qu'entraînent l'utilisation de toile et l'usure de celle-ci, le document de brevet FR 2 529 053 décrit un moule en matière plastique qui remédie à ces inconvénients ; dans ce moule, l'égouttage se fait directement par les parois du moule et non plus par des matériaux intermédiaires. A cet effet, les parois du moule ainsi que le fond présentent un tramage obtenu thermiquement et imitant à la perfection l'aspect extérieur d'une toile traditionnelle ; de plus, ces mêmes parois et le fond ainsi constitués présentent une multitude de trous de diamètre inférieur à 1 mm et d'une grande densité. Ces moules, connus sous l'appellation de moules « micro-perforés », ne présentent pas les inconvénients de mise en conformité avec les règles d'hygiène, que connaissent les moules avec toiles, et rendent possible une mécanisation, mais leur utilisation entraine des défauts de croûtage (présence de « picots », excroissances sur la superficie du fromage).

De plus, ces moules entraînent fréquemment des défauts de qualité du fromage car ils produisent un marquage mécanique des talons et l'apparition localement de moisissures. En outre, les moules comportant sur leurs parois internes des micro-perforations et/ou des reliefs, notamment quadrillés, se sont révélés insuffisants pour assurer un « morgeage » (formation de morge) et un égouttage efficaces du fromage.

Par ailleurs afin de n'autoriser dans certains cas qu'une moindre oxygénation de la pâte, notamment au niveau des bords du fromage en contact avec le moule, de façon à former une croûte de meilleure qualité, le document de brevet EP 685 153 décrit un moule comportant au moins un corps au moins localement micro-perforé et un moyen pour masquer localement les micro-perforations du corps. En outre, ce moyen de masquage local des micro-perforations comporte un moyen de déplacement de façon à déplacer le moyen de masquage sur commande lors du nettoyage du moule ; le moyen de masquage est un type de ceinture amovible se déplaçant le long des parois de la jupe du moule.

Toutefois ce moule n'est adapté qu'à la fabrication des fromages à pâte pressée et pose des problèmes sur le plan de l'hygiène, sans éliminer la formation de rognures ou de picots. Il n'est qu'une adaptation des moules micro-perforés à la fabrication de fromages à pâte pressée pour certains produits où l'on veut limiter l'oxydation de la pâte et de la croûte.

Afin d'allier les avantages des moules toilés et des moules micro-perforés, le brevet FR 2 711 037 décrit un moule assurant un égouttage rapide et efficace, permettant de contrôler l'état de surface du fromage tout en évitant la survenue de moisissures locales et/ou le poissage local pour les fromages à croûte « morgée », évitant le marquage de talons, et facilement nettoyable. Ce moule comprend des parois comportant un store en polypropylène avec des mailles facilitant l'égouttage du caillé, fixé sur la face interne des parois par des soudures à ultrasons ; ce moule est dépourvu de fond et est adapté à la fabrication des fromages à pâte molle et non à celle des fromages à pâte pressée, où le moule rempli de caillé doit subir une étape d'autopressage et/ou de pressage mécanique.

L'invention a donc pour but de créer un nouveau moule qui allie les avantages des moules avec toiles à ceux des moules micro-perforés et soit parfaitement adapté à la fabrication des fromages à pâte molle et à pâte pressée. De plus, ce nouveau moule doit pouvoir être sans difficulté mis en conformité avec les impératifs édictés en matière sanitaire et permettre toute mécanisation des procédés.

A cet effet, l'invention concerne un dispositif de moulage de fromages à partir de caillé, du type comprenant au moins un moule, le moule comporte un corps creux percé de trous traversants d'évacuation de lactosérum, caractérisé en ce que la section transversale minimale desdits trous sur leur longueur est inférieure à approximativement 7,5 mm² et comprise de préférence approximativement dans la gamme de 0,75 à 7,5 mm², et une toile drainante, et la toile drainante est fixée dans le corps de manière inamovible et incrustée dans la surface de celui-ci, sur au moins un tiers environ de l'épaisseur de la toile, dans les régions du corps susceptibles d'être en contact avec le caillé.

Grâce à ces caractéristiques, et notamment à la grande résistance mécanique conférée par le fait que la toile est solidaire du corps du moule, il est possible d'appliquer une force mécanique relativement importante pour la fabrication des fromages à pâte pressée, et les procédés peuvent être mécanisés sans inconvénient. De plus, au niveau de ses mailles, la toile fait office de filtre et assure une meilleure retenue des «fines » du fromage.

D'autres caractéristiques et avantages de l'invention apparaîtront de la description qui va suivre, d'une forme de réalisation de l'invention décrite à titre d'exemple non limitatif et représentée sur les dessins joints dans lesquels :
- la figure 1 est une vue schématique en coupe d'un dispositif de moulage selon l'invention muni d'un piston presseur, pour la fabrication de fromages à pâte pressée, et
- la figure 2 est une vue schématique en coupe, d'une partie du dispositif de la figure 1, très agrandie.

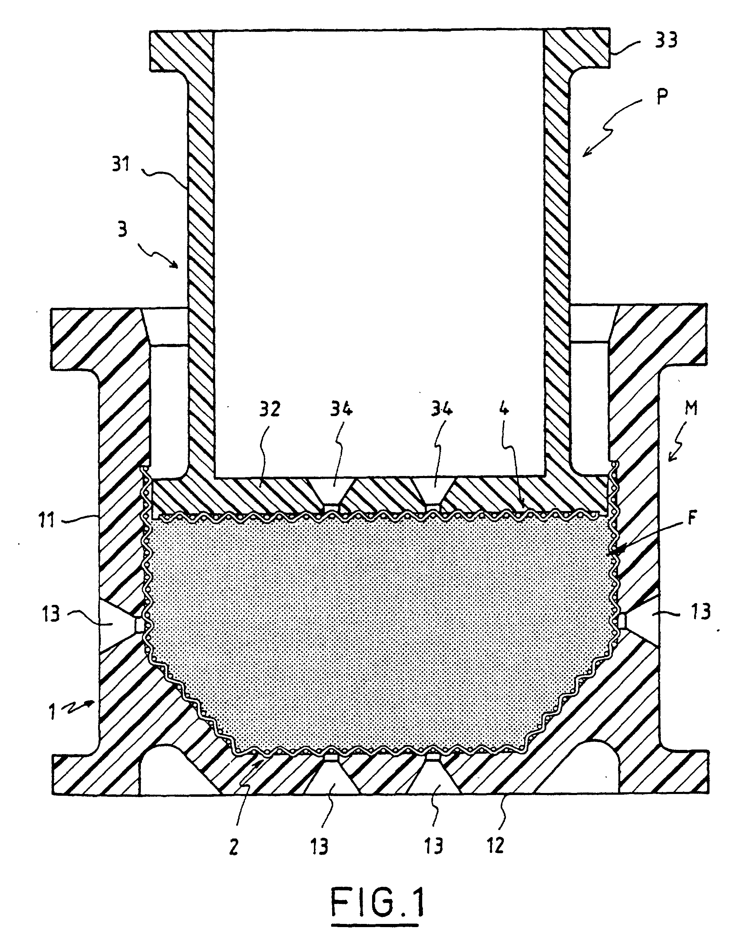

Le dispositif de la figure 1 comprend un unique moule M et un piston presseur P.

Le moule M comporte un corps 1 en matériau pouvant être considéré comme non-poreux et une toile drainante 2.

Le corps 1 comprend une jupe 11 et un fond 12 ici en une seule pièce, de dimensions et de formes adaptées au type de fromage à fabriquer ; le fond peut aussi bien être plan, bombé, hémisphérique, elliptique, et la jupe présente intérieurement une forme correspondante.

Ces deux éléments 11, 12 sont réalisés de préférence en matériau synthétique, avantageusement en polypropylène.

La jupe et le fond sont percés de part en part de trous 13 traversants d'évacuation du lactosérum répartis selon un maillage d'environ 15 mm x 15 mm.

Ces trous ont ici un diamètre inférieur à 3 mm, par exemple de l'ordre de 1 à 3 mm dans une région cylindrique débouchant à l'intérieur du moule, et sont évasés tronconiquement vers l'extérieur pour faciliter leur nettoyage. On peut dire que de manière plus générale, ces trous présentent donc sur leur longueur une section transversale minimale inférieure à approximativement 7,5 mm² et comprise de préférence approximativement dans la gamme de 0,75 à 7,5 mm².

Le piston P comporte également un corps 3 comprenant en une seule pièce un fût tubulaire 31 à une extrémité duquel s'étend, perpendiculairement à l'axe longitudinal du fût, une plaque d'appui 32 dont une surface active est destinée à venir en contact avec le fromage à égoutter pour assurer le pressage, et auquel est raccordée, à l'extrémité opposée, une bride ou collerette 33 ; il comporte aussi une toile drainante 4.

Le corps du piston est également de préférence en matériau synthétique, par exemple en polypropylène.

La plaque d'appui 32 est adaptée pour coulisser pratiquement sans jeu dans la jupe 11 du moule ; elle comporte également des trous traversants 34 d'évacuation du lactosérum similaires à ceux du corps 1 du moule M et présentant donc ici un diamètre de l'ordre de 1 à 3 mm dans leur région cylindrique débouchant à l'intérieur du moule et évasés vers la surface de la plaque constituant le fond du fût. La collerette 33 a pour but d'aider au démoulage. Le fût 31 transmet l'effort de pressage à la plaque d'appui 32.

Dans la forme de réalisation préférée de l'invention, la toile drainante 2 du moule M et la toile drainante 4 du piston P ne sont pas en textile conventionnel, mais de préférence en un tissu à base de polypropylène (même matériau synthétique que le moule et le piston), de telle sorte qu'elles puissent être fixées définitivement par injection dans le corps du moule et sous le piston dès la fabrication de ces pièces par injection.

Ces toiles 2, 4 revêtent uniquement les surfaces du moule M et du piston P qui sont susceptibles d'être en contact avec la masse de fromage F.

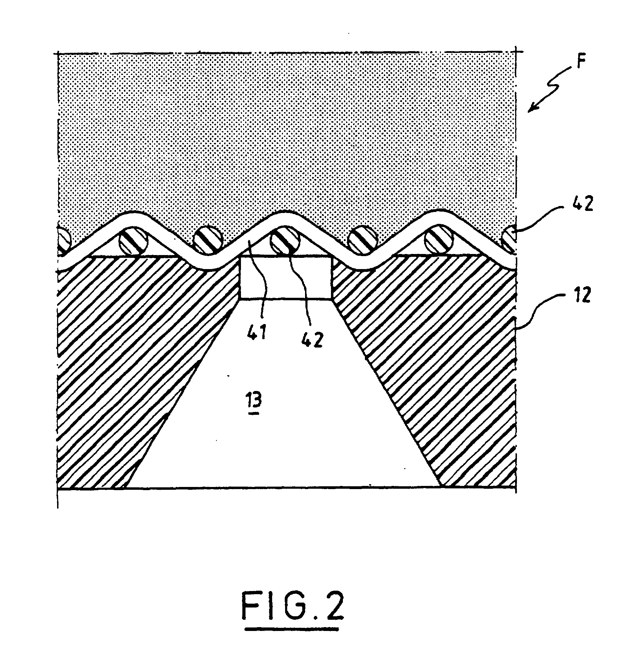

Les toiles 2, 4 ont la même structure, et on voit mieux sur la figure 2 que la toile 4 comporte une nappe de fils de trame 41 et une nappe de fils de chaîne 42, les fils de trame et les fils de chaîne étant entrecroisés selon une structure tissée (chaque fil d'une nappe passant successivement sur un fil, puis sous le fil suivant, puis à nouveau sur un fil, etc. de l'autre nappe, tandis que le fil suivant de la première nappe passe successivement sous le même fil, puis sur le fil suivant, puis à nouveau sous un fil, de la deuxième nappe).

Egalement selon l'invention, non seulement ces toiles 2, 4 sont fixées de manière inamovible, mais elles sont de plus incrustées dans la surface de la pièce 1, 3 qui les porte, sur au moins un tiers environ de leur épaisseur. Cette profondeur d'incrustation minimale correspond approximativement au diamètre des fils de trame 41 ou des fils de chaîne 42 (cf. figure 2).

On peut par exemple choisir les emplacements des trous 13, 34 d'évacuation de lactosérum de telle sorte que leur orifice par lequel ils débouchent dans le moule soit traversé approximativement centralement par un fil de trame 41 et un fil de chaîne 42.

A titre d'exemple, pour la fabrication d'un fromage à pâte pressée de type gouda, les toiles présentent une épaisseur de 0,3 à 0,6 mm selon les besoins du drainage.

Le dispositif de moulage selon l'invention peut être constitué sous la forme d'un moule unique comme sur les figures, ou encore sous la forme d'un bloc-moules comprenant plusieurs moules.

Pour sa mise en oeuvre, le corps creux 1 ou chaque corps creux du dispositif selon l'invention est rempli d'une quantité appropriée de caillé plus ou moins solide qui y est maintenu jusqu'au démoulage, c'est-à-dire tout au long des étapes d'égouttage du lactosérum résiduel, d'acidification et éventuellement de pressage ; grâce à la structure du dispositif de moulage selon l'invention, même sous la contrainte de la pression, le sérum s'évacue de façon régulière par l'intermédiaire de la matière draînante et filtrante, en tous les points de la masse du fromage et de sa superficie, ce qui produit une pâte homogène et inhibe tout fermeture de pâte ou/et emprisonnement du sérum ; en outre, les pertes en fines sont limitées du fait que les trous 13, 34 jouent le rôle de filtres par recouvrement au niveau de ceux-ci, ce qui améliore le rendement fromager. L'amélioration de la qualité comparativement à celle qui est obtenue au moyen des autres types de dispositifs de moulage se constate également au niveau de l'état de surface du fromage obtenu, car on n'observe aucune formation de picots correspondant aux emplacements des trous, contrairement au cas des moules micro-perforés.

De plus, ce dispositif de moulage peut être parfaitement mis en conformité avec les règles sanitaires, par exemple par lavage en machine, et permet l'automatisation des chaînes de fabrication.

Il allie donc les avantages des moules antérieurs avec toiles séparées pour l'évacuation du sérum et le formage de la surface du produit fini, et des moules antérieurs micro-perforés pour le démoulage, la manipulation, et le respect des règles sanitaires, que ce soit pour la fabrication de fromages à pâte molle, ou de fromages à pâte pressée.

## Revendications

1. Dispositif de moulage de fromages à partir de caillé, du type comprenant au moins un moule (M), le moule comporte un corps (1) creux percé de trous traversants d'évacuation de lactosérum, **caractérisé en ce que** la section transversale minimale desdits trous sur leur longueur est inférieure à approximativement 7,5 mm² et comprise de préférence approximativement dans la gamme de 0,75 à 7,5 mm², et une toile drainante (2), et la toile drainante est fixée dans le corps de manière inamovible et incrustée dans la surface de celui-ci, sur au moins un tiers environ de l'épaisseur de la toile, dans les régions du moule susceptibles d'être en contact avec le caillé.

2. Dispositif de moulage selon la revendication 1, **caractérisé en ce que** le corps creux (1) comprend une jupe (11) et un fond (12) comportant tous deux des trous d'évacuation de lactosérum.

3. Dispositif de moulage selon la revendication 1, **caractérisé en ce qu'**il comprend également un piston presseur (P) amovible comportant un corps (3) et une toile drainante (4), et la toile drainante est fixée au corps de manière inamovible et incrustée dans la surface de celui-ci, sur au moins un tiers environ de son épaisseur, dans les régions du piston-presseur susceptibles d'être en contact avec le caillé.

4. Dispositif de moulage selon l'une quelconque des revendications 1 et 3, **caractérisé en ce que** la toile drainante (2, 4) fixée et incrustée est une toile tissée dont la pose est réalisée par injection lors de la fabrication de la pièce (M, P) dans laquelle elle est incrustée.

5. Dispositif de moulage selon la revendication 1, **caractérisé en ce que** le corps (1) est en polypropylène.

6. Dispositif de moulage selon la revendication 1, **caractérisé en ce que** la toile drainante (2, 4) est en un tissu à base de polypropylène.

7. Dispositif de moulage selon la revendication 1, **caractérisé en ce qu'**il comprend un seul moule (M).

8. Dispositif de moulage selon la revendication 1, **caractérisé en ce qu'**il est constitué sous la forme d'un bloc-moules comprenant plusieurs moules (M).

9. Utilisation du dispositif de moulage selon l'une quelconque des revendications 1 à 8, pour la fabrication de fromages à pâte molle ou à pâte pressée.

## Patentansprüche

1. Vorrichtung zum Formen von Käse aus Sauermilch, welche mindestens eine Form (M) umfasst, die ein hohles Gehäuse (1), das mit die Molke ableitenden durchgehenden Löchern durchbohrt ist, enthält, **dadurch gekennzeichnet, dass** der geringste Querschnitt der Löcher über ihre Länge kleiner als etwa 7,5 mm² ist und vorzugsweise im Bereich von zwischen etwa 0,75 und 7,5 mm² liegt, und sie ein Ableitungstuch (2) enthält, das unbeweglich am Gehäuse und in dessen Innenfläche über mindestens etwa ein Drittel der Tuchdicke in den Bereichen der Form eingefügt befestigt ist, die mit Sauermilch in Berührung kommen können.

2. Formgebungsvorrichtung nach Anspruch 1, **dadurch gekennzeichnet, dass** das hohle Gehäuse (1) einen Mantel (11) und einen Boden (12) umfasst, die beide Löcher für das Ablaufen der Molke enthalten.

3. Formgebungsvorrichtung nach Anspruch 1, **dadurch gekennzeichnet, dass** sie auch einen beweglichen Preßstempel (P) umfasst, der ein Gehäuse (3) und ein Ableitungstuch (4) enthält, das unbeweglich am Gehäuse und in dessen Unterseite über mindestens etwa ein Drittel seiner Dicke in den Bereichen des Preßstempels eingefügt befestigt ist, die mit Sauermilch in Berührung kommen können.

4. Formgebungsvorrichtung nach Anspruch 1 oder 3, **dadurch gekennzeichnet, dass** das befestigte und eingefügte Ableitungstuch (2, 4) ein Gewebe ist, dessen Anbringung bei der Herstellung des Bauteils (M, P), in welches es eingefügt wird, durch Spritzgießen realisiert wird.

5. Formgebungsvorrichtung nach Anspruch 1, **dadurch gekennzeichnet, dass** das Gehäuse (1) aus Polypropylen besteht.

6. Formgebungsvorrichtung nach Anspruch 1, **dadurch gekennzeichnet, dass** das Ableitungstuch (2, 4) aus einem Gewebe auf der Basis von Polypropylen besteht.

7. Formgebungsvorrichtung nach Anspruch 1, **dadurch gekennzeichnet, dass** sie eine einzige Form (M) umfasst.

8. Formgebungsvorrichtung nach Anspruch 1, **dadurch gekennzeichnet, dass** sie aus einem Formenblock besteht, der mehrere Formen (M) umfasst.

9. Verwendung der Formgebungsvorrichtung nach einem der Ansprüche 1 bis 8 zur Herstellung von Weichkäse oder Schnittkäse.

## Claims

1. Moulding device for curd cheeses, of the type comprising at least one mould (M), with the mould comprising a hollow body (1) pierced with transverse holes for draining off whey, **characterised in that** the minimum transverse section of said holes along their length is smaller by approximately 7.5mm² and preferably in the approximate range of 0.75 to 7.5mm², and also a draining cloth (2), and the draining cloth is fixed to the body in a permanent fashion and is embedded in the surface of the latter, on at least approximately one third of the thickness of the cloth, in those areas of the mould which may come into contact with the whey.

2. Moulding device according to claim 1, **characterised in that** the hollow body (1) comprises a skirt (11) and a base (12), both having holes for draining off the whey.

3. Moulding device according to claim 1, **characterised in that** it also comprises a removable pressing piston (P), comprising a body (3) and a draining cloth (4), and the draining cloth is fixed to the body in a permanent fashion and is embedded in the surface of the latter on at least approximately one third of its width, in those areas of the pressing piston which may come into contact with the whey.

4. Moulding device according to any of claims 1 to 3, **characterised in that** the fixed and embedded draining cloth (2, 4) is a woven cloth, which is fitted by injection during the manufacture of the part (M, P) in which it is embedded.

5. Moulding device according to claim 1, **characterised in that** the body (1) is made of polypropylene.

6. Moulding device according to claim 1, **characterised in that** the draining canvas (2, 4) is made from a polypropylene based material.

7. Moulding device according to claim 1, **characterised in that** it comprises a single mould (M).

8. Moulding device according to claim 1, **characterised in that** it is formed by a mould-unit comprising several moulds (M).

9. The use of a moulding device according to any of claims 1 to 8, for the manufacture of soft or hard cheeses.
